**Europäisches Patentamt**

**European Patent Office**

**Office européen des brevets**

(19)

(11) Veröffentlichungsnummer : **0 111 350**
**B1**

(12) **EUROPÄISCHE PATENTSCHRIFT**

(45) Veröffentlichungstag der Patentschrift :
22.10.86

(21) Anmeldenummer : 83201574.7

(22) Anmeldetag : 03.11.83

(51) Int. Cl.⁴ : **H 02 K   7/102**, H 02 K   7/112,
H 02 K 23/68

(54) **Mit einer Haltebremse ausgerüsteter elektrischer Motor.**

(30) Priorität : 09.11.82 CH 6493/82

(43) Veröffentlichungstag der Anmeldung :
20.06.84 Patentblatt 84/25

(45) Bekanntmachung des Hinweises auf die Patenterteilung : 22.10.86 Patentblatt 86/43

(84) Benannte Vertragsstaaten :
**CH DE FR GB IT LI SE**

(56) Entgegenhaltungen :
CH-A-   512 852
DE-A- 2 064 539
FR-A- 2 211 791
US-A- 2 879 417
US-A- 4 223 255

(73) Patentinhaber : **Mavilor Systèmes S.A.**
**Grenette**
**CH-1700 Fribourg (CH)**

(72) Erfinder : **Zähner, Pierre**
**Grange-Grèche**
**CH-1181 Luins VD (CH)**

(74) Vertreter : **Jörchel, Dietrich R.A. et al**
**c/o BUGNION S.A. Conseils en Propriété Industrielle**
**10, route de Florissant Case postale 375**
**CH-1211 Genève 12 Champel (CH)**

## Beschreibung

Die Erfindung bezieht sich auf einem mit einer Haltebremse ausgerüsteten elektrischen Motor mit axialem oder konisch verlaufendem Magnetfeld, mit zwei gegenüberliegenden, den Ständer bildenden Motorflanschen, welche auf ihren Innenseiten jeweils mehrere, axial vorstehende Ständermagnete tragen, die längs eines zur Motorwelle koaxialen Kreises verteilt sind, und mit einem im Luftspalt zwischen gegenüberliegenden Ständermagneten angeordneten, insbesondere flachen oder konischen Rotor.

Dauermagneterregte Gleichstrommotoren dieser Art in Form von Scheibenläufermotoren mit axialem Magnetfeld sind bekannt (Zeitschrift « Konstruktion & Design », Heft 5, 1978, Seiten 31 und 32). Sie zeichnen sich durch eine kompakte Flachbauweise und daher ein sehr geringes Bauvolumen, durch ein äusserst geringes Trägheitsmoment des Scheibenläufers und durch elektrische Eigenschaften aus, die eine stufenlose Drehzahlregelung von nahe Null bis zur Nenndrehzahl bei sehr kurzen Hochlauf- und Bremszeiten erlauben, wobei das volle Nenndrehmoment auch bei den untersten Drehzahlen, beispielsweise bei 0,1 U/Min, zur Verfügung steht. Der Scheibenläufer besteht im allgemeinen aus einem in Kunstharz vergossenen, eisenfreien flachen bzw. leicht konischen Rotor mit Kupferwicklung und vielfach geteiltem Flachkollektor und weist trotz seiner nur geringen Dicke eine ohne mechanische Festigkeit auf.

Aufgrund dieser konstruktiven und elektrischen Eigenschaften werden diese Motoren vorzugsweise als geregelte Servomotoren für Nachlaufsteuerungen und -regelungen verwendet, bei denen es auf eine hohe Einlauf- bzw. Positionsgenauigkeit ankommt, wie das insbesondere bei numerisch gesteuerten Montageautomaten, Industrierobotern, astronomischen Beobachtungsinstrumenten und dergleichen der Fall ist. Zur Anpassung an jeweils vorgegebene Servoregelsysteme können an dem der Abtriebsseite entgegengesetzten Motorflansch wahlweise Tachogeneratoren als Messwertgeber für die Ist-Drehzahl und/oder Impulsgeber als Messwertgeber für die Ist-Position und/oder eine elektrisch steuerbare Reibungsbremse, vor allem als Halte- oder Stillstandbremse, angebaut werden, während an dem abtriebsseitigen Motorflansch nach Wunsch ein Untersetzungsgetriebe montierbar ist. Eine Haltebremse, welche nur unter Strom lüftet und im stromlosen Zustand wirksam ist, ist bei den vorstehend erwähnten, in der Regel elektronisch abgebremsten Servomotoren immer dann erforderlich, wenn das gesteuerte oder geregelte Stellglied bei Stillstand des Motors oder bei Stromausfall exakt in seiner Position verbleiben muss, wie das beispeilsweise meistens bei Industrierobotern der Fall ist.

Als Dauermagnet-Einscheibenbremse ausgebildete Haltebremsen dieser Art sind bekannt (Informationen 7/68 vom April 1968 der Firma BINDER MAGNETE GmbH, Villingen-Schwenningen, BRD) und werden bei Bedarf an den eingangs erwähnten Scheibenläufermotoren ausserhalb des eigentlichen Motorgehäuses als separates Anbauteil angebaut, und zwar an dem der Abtriebsseite gegenüberliegenden Motorflansch. Es handelt sich hierbei um Einscheibenbremsen, bei denen die Kraft eines Dauermagneten die Bremswirkung erzeugt, während ein Elektromagnet bei Erregung das dauermagnetische Feld zwecks Lüftens der Bremse aufhebt. Bei einer vielfach verwendeten Ausführungsform besteht die feststehende Bremsenhälfte aus dem Elektromagneten und dem Dauermagneten und die umlaufende Bremsenhälfte aus einer auf der Motorwelle zu befestigenden Flanschnabe mit dem axial beweglichen, als Reibscheibe oder Bremsring fungierenden Anker. Die Eisenteile des Elektromagneten werden aus einem Flanschteil und aus inneren und äusseren Polringen gebildet ; der kreisringförmige Dauermagnet und die Erregerwicklung sitzen auf dem inneren Polring. Um bei Erregung des Elektromagneten, welcher stets gemeinsam mit dem Motor eingeschaltet wird, ein sicheres Lüften der Bremse zu gewährleisten, unterliegt der den Bremsring bildende Anker der Wirkung von Federn, welche ihn in die Lüftstellung zurückziehen und deren Federkraft im Stillstand des Motors, also bei abgeschaltetem Elektromagneten, durch den Dauermagnet überwunden wird.

Es sind auch Dauermagnet-Einscheibenbremsen bekannt, bei denen der Dauermagnet in der umlaufenden Bremsenhälfte und die Erregerwicklung des Elektromagneten in der feststehenden Bremsenhälfte angeordnet sind. Ausser Dauermagnet-Bremsen werden als Haltebremsen für Scheibenläufermotoren der genannten Art auch bekannte Federdruck-Scheibenbremsen eingesetzt, bei denen die Bremswirkung im Stillstand durch Federn erzeugt wird, deren Kraft zwecks Lüftens der Bremse durch einen dann erregten Elektromagneten so weit überwunden werden muss, dass der den Bremsring bildenden Anker mit hinreichender Bremskraft angezogen wird. Bei den meisten Anwendungen ist jedoch eine Dauermagnet-Einscheibenbremse mit elektromagnetischer Lüftung, welche ohne einen Arbeitsluftspalt arbeitet, günstiger.

Bisher wurden Haltebremsen der beschriebenen Arten grundsätzlich als separates Anbauteil aussen an Scheibenläufermotoren montiert, und zwar, wenn diese Motoren auch noch mit einem Tachogeneratoren und/oder einem Impulsgeber auszurüsten waren, zwischen dem der Abtriebsseite gegenüberliegenden Motorflansch und dem koaxial zur Motorwelle installierten Tachogenerator und/oder Impulsgeber. Dadurch werden die axialen Abmessungen des aus Motor und Anbauteilen zusammengesetzten Motorsystems vergrössert, die Anzahl der erforderlichen Wellenkupplungen, welche einerseits torsionssteif und andererseits ein gewisses axiales und radiales Spiel haben müssen, erhöht und schliesslich ein Austausch oder eine Nachstellung der Bremse erschwert, welche erst nach der Entfernung der eventuell vorhandenen weiteren Anbauteile zugänglich ist. Da ferner bei den bekannten Scheibenläufermotoren der beschriebenen Art der Kollektor auf der der Abtriebsseite abgewandten Rotorseite und entsprechend die Kohlebürsten an dem der Abtriebsseite abgewandten Motorflansch angeordnet sind, muss zum Auswechseln dieser Kohlebürsten die an diesem Motorflansch angebaute Bremse zuvor demontiert werden, was umständlich und zeitraubend ist.

Die vorstehend erläuterten Probleme gelten auch für Motoren mit konischem Rotor und/oder konisch orientiertem Magnetfeld. Wenn ein Rotor mit stärkerer Konizität vorgesehen ist, beispielsweise zwecks Verringerung des Trägheitsmomentes, dann ist auch ein entsprechend konisch orientiertes Magnetfeld vorteilhaft, bei welchem die magnetischen Achsen der Ständermagnete auf einer Kegelfläche liegen und daher die Ständermagnete im entsprechenden Winkel zur Motorachse geneigt angeordnet sind.

Der Erfindung liegt die Aufgabe zugrunde, einen mit einer Haltebremse ausgerüsteten elektrischen Motor der beschriebenen Art als kompakte Baueinheit auszubilden, deren Abmessungen nicht grösser als die des Motorgehäuses sind und in welcher die Bremse vollständig integriert ist.

Diese Aufgabe wird erfindungsgemäss dadurch gelöst, dass die Haltebremse vollständig in der einen Motorhälfte installiert und im wesentlichen in dem von den Ständermagneten des betreffenden Motorflansches begrenzten Ringraum untergebracht ist und dass die feststehende Bremsenhälfte ein am betreffenden Motorflansch befestigtes, aus ferromagnetischem Material bestehendes Flanschteil mit einem an seiner Innenfläche vorspringenden, zur Motorwelle koaxialen inneren Polring aufweist, der in seinem Inneren das Lager für die Motorwelle trägt und auf dessen Aussenumfang die Erregerwicklung des Elektromagneten sitzt.

Durch diese konstruktive Ausbildung wird die Haltebremse erstmals vollständig in den Motor selber integriert, wobei in geschickter Weise der bisher niemals anderweitig ausgenutzte freie Ringraum innerhalb der Ständermagnete zur Unterbringung der Bremse benutzt und der innere Polring als Träger für das Wellenlager, vorzugsweise ein Kugellager, verwendet wird. Die Abmessungen des neuen, aus Motor und Bremse bestehenden Systems sind daher nicht grösser als die des Motors selber, ausserdem wird das Bremsengehäuse eingespart, was insbesondere das Gewicht verringert.

Im Falle von Gleichstrommotoren der erwähnten Bauart wird erfindungsgemäss die Bremse in der dem Kollektor abgewandten, abtriebsseitigen Motorhälfte angeordnet. Wenn bei einem solchen Motor an dem der Abtriebsseite entgegengesetzten Motorflansch keine weiteren Anbauteile vorgesehen sind, dann können die Kohlebürsten, deren Bürstenhalter an diesem Motorflansch befestigt und zugänglich sind, ohne weiteres und rasch ausgewechselt werden, was bisher wegen der aussen angebauten Bremse nicht möglich war.

Vorzugsweise ist das Flanschteil in eine seinem Umfang angepasste Oeffnung des betreffenden Motorflansches eingesetzt und an diesem befestigt. Auf diese Weise wird auch noch die Dickenabmessung dieses Motorflansches zur Unterbringung der feststehenden Bremsenhälfte ausgenutzt, und gleichzeitig werden Montage, Auswechslung und Nachstellung der Bremse wesentlich vereinfacht, weil nach dem Lösen des Flanschteils nicht nur die feststehende Bremsenhälfte, sondern durch die Oeffnung des Motorflansches hindurch auch die umlaufende Bremsenhälfte, also Anker und Flanschnabe, zugänglich sind. Es ist also nicht nötig, den Motorflansch zu demontieren, was bei dauermagneterregten Motoren eine vorhergehende Entmagnetisierung der die Ständermagnete bildenden Dauermagnete erforderlich machen würde. Derartige Motoren müssen nämlich in der Regel bei entmagnetisierten Ständer-Dauermagenten zusammengebaut bzw. auseinandergenommen werden, weil andernfalls die dauermagnetischen Felder der Dauermagnete eine Handhabung zu sehr erschweren würden. Daher werden die Ständer-Dauermagnete erst nach der vollständigen Montage des Motors magnetisiert und müssen vor einer Demontage entmagnetisiert werden, wozu auf diesen Dauermagneten besondere Magnetisierungs- bzw. Entmagnetisierungswicklungen angeordnet sind.

Die Haltebremse ist vorzugsweise eine an sich bekannte Dauermagnet-Scheibenbremse, wobei Flanschteil und innerer Polring einteilig ausgebildet sind.

Die umlaufende Bremsenhälfte besteht zweckmässigerweise aus einer auf der inneren Motorwelle befestigten Flanschnabe aus einem Leichtmetall wie Aluminium und aus dem auf dieser Flanschnabe axial beweglichen, unter der Wirkung von Lüftungsfedern stehenden Anker, der die Reibscheibe bzw. den Bremsring bildet.

Beim vorstehend erwähnten Ausführungsbeispiel, bei welchem das einstückig mit dem Polring ausgebildete Flanschteil der feststehenden Bremsenhälfte in einer entsprechenden Oeffnung des abtriebsseitigen Motorflansches sitzt, ist die Anordnung bei Lagerung der Motorwelle in Kugellagern vorteilhafterweise so getroffen, dass der Aussenring des abtriebsseitigen Kugellagers unter Gleitreibung auf der inneren Umfangsfläche des erwähnten Polrings sitzt und in an sich bekannter Weise durch einen Federring axial in Richtung auf den Motorläufer belastet ist. Diese axiale Anstellung des äusseren Kugellagerringes ermöglicht eine gewisse Nachgiebigkeit unter der Wirkung axial gerichteter Kräfte, insbesondere infolge Erwärmung. Die Stärke der Gleitreibung ist so zu bemessen, dass der Kugellagerring nicht mitdreht, jedoch in Achsenrichtung nachgeben kann. Der direkte Sitz des äusseren Kugellagerringes auf dem Innenumfang des Polrings und die Einteiligkeit von Polring und Flanschteil der feststehenden Bremsenhälfte garantieren ausserdem, dass auf die Welle wirkende radiale Kräfte, insbesondere radiale Schwingungen, über das Flanschteil auf den betreffenden Motorflansch übertragen und von diesem aufgenommen werden.

Weitere zweckmässige Ausgestaltungen des Motors nach der Erfindung ergeben sich aus den abhängigen Ansprüchen.

Die Erfindung wird anhand der Zeichnungen am Beispiel eines mit einer eingebauten Dauermagnet-Einscheibenbremse ausgerüsteten Scheibenläufermotors näher erläutert. Es zeigen :

Figur 1 eine Seitenansicht dieses Motors, wobei der Bereich, in dem die Bremse untergebracht ist, im Axialschnitt dargestellt ist, und

Figur 2 eine Draufsicht auf den abtriebsseitigen Motorflansch in Richtung des Pfeils II nach Figur 1.

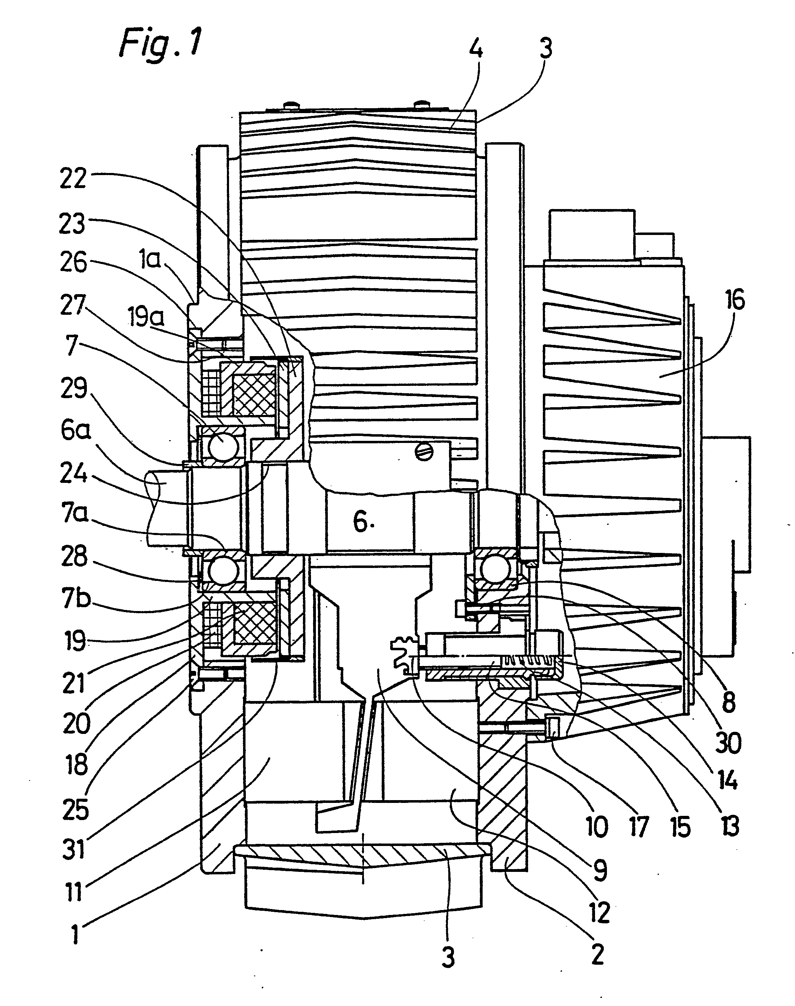

Das Gehäuse des dargestellten Motors besteht aus einem abtriebsseitigen runden Motorflansch 1, einem gegenüberliegenden Motorflansch 2 und einem vorzugsweise aus Aluminium gefertigten Gehäusering 3, welcher mit angeformten Kühlrippen 4 versehen ist und an welchem die beiden Motorflansche 1 und 2 mittels Schrauben 5 befestigt sind. Die Motorwelle 6, deren abtriebsseitiges Wellenende 6a im allgemeinen über ein nicht dargestelltes Untersetzungsgetriebe mit der anzutreibenden Welle der gesteuerten oder geregelten Einrichtung gekuppelt ist, ist in Kugellagern 7 und 8 gelagert. Diese Motorwelle 6 trägt als Scheibenläufer einen tellerförmigen, leicht konisch gestalteten und in Kunstharz vergossenen Rotor 9 mit nicht dargestellter Kupferwicklung und vielfach geteiltem Flachkollektor 10, von welchem ein Kollektorelement in Figur 1 zu sehen ist. Die leicht konische Bauform gibt dem Rotor eine ohne mechanische Festigkeit.

An der Innenseite jedes Motorflansches 1 und 2 sind axial vorstehende, Ständermagnete 11 und 12 bildende Dauermagnete befestigt, die längs eines zur Motorwelle 6 koaxialen Kreises gleichmässig verteilt angeordnet und in Figur 1 schematisch dargestellt sind. Sie liegen parallel zur Motorachse und erzeugen ein axiales Magnetfeld. An jedem Motorflansch 1 bzw. 2 können beispielsweise sechs oder auch acht Ständermagnete 11 bzw. 12 vorgesehen sein. Die einander paarweise gegenüberliegenden Ständermagnete 11 und 12 begrenzen einen engen Luftspalt, in welchem der Rotor 9 dreht und welcher dessen leicht konischer Form angepasst ist. Am Motorflansch 2 sind ferner Bürstenhalter 13 für die durch Federn 14 belasteten Kohlebürsten 15 angeordnet, welche gegen den Flachkollektor 10 gedrückt werden.

Im betrachteten Beispiel ist an dem der Abtriebsseite abgewandten Motorflansch 2 ein Anbauteil 16, bei dem es sich insbesondere um einen Tachogenerator zur Messung der Ist-Drehzahl handeln kann, mitteks Schrauben 17 befestigt. Als weiteres Anbauteil kann ein Impulsgeber zur Messung der Ist-Position vorgesehen sein.

Der Motor ist mit einer erfindungsgemäss in das Motorinnere eingebauten Haltebremse ausgerüstet, und zwar im betrachteten Ausführungsbeispiel mit einer Dauermagnet-Einscheibenbremse. Die feststehende Bremsenhälfte besteht aus einem Flanschteil 18 mit einem daran einteilig angeformten inneren Polring 19, auf welchem ein ringförmiger Dauermagnet 20 und daneben eine Erregerwicklung 21 angeordnet sind. Diese Erregerwicklung 21 und die vom Flanschteil 18 mit dem Polring 19 gebildeten Eisenteile stellen den Elektromagneten der Bremse dar. Um einen so weit wie möglich in Eisenteilen verlaufenden, geschlossenen Magnetfluss zu erzielen, kann ausser dem inneren Polring 19 auch noch ein äusserer, im Querschnitt L-förmiger Polring 19a vorgesegen sein, dessen achsenparalleler Abschnitt die Erregerwicklung 21 aussen umgibt und dessen zum Motorflansch 1 paralleler Abschnitt zwischen Brems-Dauermagnet 20 und Erregerwicklung 21 liegt.

Die umlaufende Bremsenhälfte besteht aus einer auf der Motorwelle 6 befestigten Flanschnabe 22, vorzugsweise aus Aluminium, und aus dem den Bremsring bildenden Anker 23, der axial beweglich, jedoch drehfest auf der Flanschnabe 22 sitzt und durch nicht dargestellte Federn in Richtung auf diese Flanschnabe 22, also im Sinne einer Lüftung der Bremse, beaufschlagt wird. Die Flanschnabe 22 ist, wie übrigens auch der Rotor 9, in einer Ringnut der Motorwelle 6 auf einen mit Presssitz auf dieser Motorwelle 6 befestigten Toleranzring 24 aufgepresst. Durch diesen Presssitz ist die umlaufende Bremsenhälfte auf einfache Weise drehfest mit der Motorwelle 6 verbunden. Da die Flanschnabe 22 zweckmässigerweise aus Aluminium besteht, ist als Zwischenteil zwischen dieser und dem Toleranzring 24 vorzugsweise noch eine nicht gezeigte Stahlbüchse vorgesehen.

Das rund ausgebildete Flanschteil 18 der feststehenden Bremsenhälfte ist in eine seinem Umfang angepasste, ausgedrehte Oeffnung des abtriebsseitigen Motorflansches 1 eingesetzt und an diesem mit Hilfe von Schrauben 25 befestigt. Die die Motorflanschöffnung begrenzende Innenwand ist gestuft ausgebildet, wobei der Durchmesser der äusseren Stufe 26 grösser ist als der der inneren Stufe 27. Das Flanschteil 18 ist so dick wie die äussere Stufe 26 und nur in den von dieser äusseren Stufe 26 begrenzten Oeffnungsabschnitt eingesetzt, so dass die Aussenflächen des Flanschteiles 18 und des Motorflansches 1 in einer Ebene liegen. Die Schrauben 25 greifen in den die innere Stufe 27 umgebenden Wandbereich des Motorflansches 1 ein.

Das abtriebsseitige Kugellager 7 sitzt mit seinem Aussenring 7b unter Gleitreibung auf der inneren Umfangsfläche des Polrings 19 und unterliegt der Wirkung einer Feder 28, die diesen Aussenring 7b in Richtung auf das Motorinnere zu drücken sucht. Der Innenring 7a des Kugellagers 7 ist mit Pressung axial unbeweglich auf der Motorwelle 6 befestigt, auf welcher aussen ein Stahlring 29 sitzt. Ebenso ist das andere Kugellager 8 axial unbeweglich, sein Aussenring ist mit Hilfe von Schrauben 30 am Motorflansch 2 befestigt. Die axiale Anstellung des Aussenrings 7b des Kugellagers 7 erlaubt ein gewisses Nachgeben unter der Wirkung axialer Kräfte, vor allem bei einer Wärmeausdehnung. Die Stärke des Gleitsitzes des Aussenringes 7b ist natürlich so gross bemessen, dass dieser Aussenring 7b nicht mit der Motorwelle 6 mitdreht. Der direkte Sitz des Aussenringes 7b auf dem Innenumfang des inneren Polrings 19 sowie die Einteiligkeit von Flanschteil 18 und Polring 19 haben den Vorteil, dass radiale Kräfte, insbesondere radiale Schwingungen der Motorwelle 6, über den Polring 19 und das Flanschteil 18 auf den Motorflansch 1 übertragen und von diesem aufgenommen werden.

Um zu verhindern, dass Staub, insbesondere beim Abrieb der Kohlebürsten 15 entstehender Graphitstaub, in den Bremsenspalt eindringt, ist auf dem Umfang der Flanschnabe 22 der umlaufenden Bremsenhälfte eine Staubschutzhülse 31 aufgepresst, die den Bremsensplat abdeckt und einen Teil der Erregerwicklung 21 der feststehenden Bremsenhälfte mit minimalen Spiel berührungsfrei überlappt.

Die beschriebene Dauermagnet-Einscheibenbremse arbeitet folgendermassen : Bei Nichtbetrieb des Motors nimmt die Bremse ihre Bremsstellung ein, das heisst, der Anker 23 wird durch den Dauermagneten 20 entgegen der Wirkung der nicht gezeigten Lüftungsfedern gegen die Polflächen der Polringe 19, 19a, gedrückt, welche mit einem geeigneten Reibbelag versehen sein können. Im die Bremswirkung aufzuheben und die Bremse zu lüften, wird die Erregerwicklung 21 erregt, wodurch das nunmehr erzeugte Magnetfeld des Elektromagneten das dauermagnetische Feld des Dauermagneten 20 aufhebt bzw. verdrängt, so dass der Anker 23 unter der Wirkung der Lüftungsfedern von den Polringen 19, 19a abgehoben und in seine Lüftungsstellung bewegt wird. Die Bremse arbeitet also als Halte- oder Stillstandsbremse und ist zu diesem Zwecke mit ihrer Erregerwicklung 21 derart an die Motorschaltung bzw. die Speiseschaltung angeschlossen, dass diese Erregerwicklung 21 immer dann erregt wird, wenn der Motor in Betrieb gesetzt wird. Im stromlosen Zustand, also bei Nichtbetrieb des Motors oder auch bei Stromausfall, ist die Bremse stets wirksam, damit dann die vom Motor angetriebene Einrichtung ihre Lage nicht verändert, was insbesondere bei Industrierobotern wichtig ist.

Motor und integrierte Bremse bilden also eine kompakte Baueinheit, deren Abmessungen denen des Motors selber entsprechen, weil der freie Ringraum innerhalb der Ständermagnete 11 und die im Motorflansch 1 vorgesehene Oeffnung zur Unterbringung dieser Bremse ausgenutzt werden. Auf diese Weise ist die Bremse auch auf einfache Weise zugänglich, da lediglich die das Flanschteil 18 haltenden Schrauben 25 gelöst werden müssen. Das erleichtert wesentlich den Austausch oder eine eventuell erforderliche Nachstellung der Bremse, weil kein Motorflansch demontiert zu werden braucht. Eine Demontage des Motors würde im allgemeinen eine vorherige Entmagnetisierung der Ständermagnete notwendig machen, da derartige, für Scheibenläufermotoren der betrachteten Art eingesetzte Dauermagnete in der Regel erst im montierten Zustand des Motors magnetisiert und vor jeder Demontage des Motors entmagnetisiert werden müssen. Zu diesem Zwecke tragen alle Ständermagnete nicht dargestellte besondere Wicklungen zum Auf- und Entmagnetisieren.

Wegen der eingebauten Bremse wird auch das sonst erforderliche Bremsengehäuse eingespart, was eine bedeutende Gewichtsersparnis mit sich bringt.

Wenn der Motor nach der Erfindung ohne äussere Anbauteile, also beim betrachteten Ausführungsbeispiel ohne den angebauten Tachogenerator 16, betrieben wird, dann ergibt sich der weitere Vorteil, dass die Kohlebürsten 15 zwecks Auswechslung ohne weiteres am Motorflansch 2 zugänglich sind.

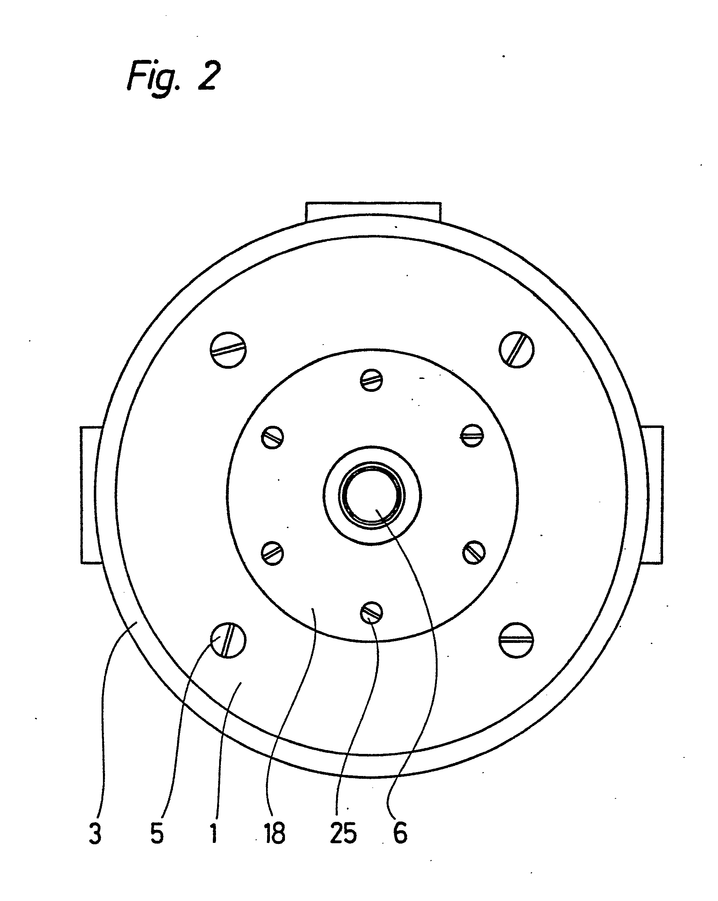

Die Erfindung ist nicht auf das beschriebene Ausführungsbeispiel beschränkt, sondern lässt hinsichtlich des Aufbaus der Bremse und des Motors sowie des Motortyps manigfache Varianten zu. So könnte beispielsweise der Bremsen-Dauermagnet auch auf der umlaufenden Bremsenhälfte befestigt werden ; um jedoch das Trägheitsmoment der umlaufenden Teile möglichst gering zu halten, ist die anhand der Figuren 1 und 2 beschriebene Ausführungsform günstiger. Anstelle einer Dauermagnet-Scheibenbremse kann gegebenenfalls auch eine an sich bekannte, durch einen Elektromagneten lüftbare Federdruck-Scheibenbremse als Haltebremse in den Motor eingebaut werden. Gegebenenfalls kann die Bremse, unter Verzicht auf eine Ausdrehung des abtriebsseitigen Motorflansches, auch an der Innenseite dieses Motorflansches befestigt werden, so dass sie mit ihrer gesamten axialen Abmessung in dem durch die vorstehenden Ständermagnete 11 begrenzten Ringraum liegt.

Im betrachteten Beispiel hat der Motorflansch 1 auf seiner Aussenseite eine ringförmige Stufe 1a, die einen Zentrierungsdurchmesser für den zentrierten Anbau weiterer Bauteile bzw. den Motoreinbau definiert. Die Anordnung kann jedoch auch so getroffen sein, dass das runde Flanschteil 18 auf der Aussenseite des Motorflansches 1 vorsteht und so mit seinem vorspringenden Aussenumfang den Zentrierungsring definiert, der dann am Motorflansch selber entfallen kann.

Ausser dem als Ausführungsbeispiel beschriebenen Motor mit leicht konischem Rotor und axialem Magnetfeld fallen auch Motoren mit flachem Rotor, mit mehr oder weniger konischem Rotor und mit konisch orientiertem Magnetfeld sowie ferner alle anderen Motorarten unter die Erfindung, bei denen die Geometrie der axial am Motorflansch vorstehenden Ständermagnete eine Unterbringung der Bremse in dem von diesen Magneten begrenzten Ringraum erlaubt, wobei es sich bei den Ständermagneten im Prinzip auch um Elektromagnete, insbesondere mit steuerbarer Erregung, handeln kann.

## Patentansprüche

1. Mit einer Haltebremse ausgerüsteter elektrischer Motor mit axialem oder konisch verlaufendem Magnetfeld, mit zwei gegenüberliegenden, den Ständer bildenden Motorflanschen (1, 2), welche auf ihren Innenseiten jeweils mehrere, axial vorstehende Ständermagnete (11, 12) tragen, die längs eines zur Motorwelle koaxialen Kreises verteilt sind, und mit einem im Luftspalt zwischen gegenüberliegenden Ständermagneten angeordneten, insbesondere flachen oder konischen Rotor (9), wobei die Haltebremse als Dauermagnet- oder Federdruck-Scheibenbremse ausgebildet ist und zum Lüften der Bremse einen Elektromagneten (18, 19, 21) trägt, der bei Erregung die Bremswirkung aufhebt, dadurch gekennzeichnet, dass die Haltebremse (18 bis 23) vollständig in der einen Motorhälfte installiert und im wesentlichen in dem von den Ständermagneten (11) des betreffenden Motorflansches (1) begrenzten Ringraum untergebracht ist und dass die feststehende Bremsenhälfte (18 bis 21) ein am betreffenden Motorflansch (1) befestigtes, aus ferromagnetischem Material bestehendes Flanschteil (18) mit einem an seiner Innenfläche vorspringenden, zur Motorwelle (6) koaxialen inneren Polring (19) aufweist, der in seinem Inneren das Lager für die Motorwelle (6) trägt und auf dessen Aussenumfang die Erregerwicklung (21) des Elektromagneten sitzt.

2. Motor nach Anspruch 1, dadurch gekennzeichnet, dass das Flanschteil (18) in einer seinem Umfang angepassten Oeffnung des Motorflansches (1) eingesetzt und an diesem, vorzugsweise mittels Schrauben (25), befestigt ist.

3. Motor nach Anspruch 2, dadurch gekennzeichnet, dass die die Oeffnung des Motorflansches (1) begrenzende Innenwand gestuft ausgebildet ist, wobei der Durchmesser der äusseren Stufe (26) grösser als der der inneren Stufe (27) ist, und dass das Flanschteil (18) der feststehenden Bremsenhälfte (18 bis 21) lediglich in den von der äusseren Stufe (26) begrenzten Oeffnungsabschnitt eingesetzt ist.

4. Motor nach einem der Ansprüche 1 bis 3, mit einer Dauermagnet-Einscheibenbremse, dadurch gekennzeichnet, dass die feststehende Bremsenhälfte (18 bis 21) ausser dem Elektromagneten auch den Bremsdauermagneten (20) aufweist, der auf dem inneren Polring (19) sitzt, dass die umlaufende Bremsenhälfte aus einer auf der Motorwelle (6) befestigten Flanschnabe (22) und einem darauf axial beweglich angeordneten, den Reibring bildenden Anker (23) besteht, und dass das Flanschteil (18) und der innere Polring (19) einteilig ausgebildet sind.

5. Motor nach einem der Ansprüche 1 bis 4, mit in Kugellagern gelagerter Motorwelle, dadurch gekennzeichnet, dass der axial angestellte Aussenring (7b) des bremsenseitigen Kugellagers (7) mit Gleitreibung auf dem Innenumfang des inneren Polrings (19) sitzt und dass das aus Flanschteil (18) und Polring (19) bestehende einstückige Teil dazu bestimmt ist, radiale Kräfte, insbesondere Schwingungen der Motorwelle (6), auf den Motorflansch (1) zu übertragen.

6. Motor nach einem der Ansprüche 1 bis 5, dadurch gekennzeichnet, dass auf den Umfang der Flanschnabe (22) der umlaufenden Bremsenhälfte (22, 23) eine Staubschutzhülse (31) aufgepresst ist, welche den Bremsenspalt abdeckt und einen Teil der feststehenden Bremsenhälfte (18 bis 21) berührungsfrei mit minimalem Spiel überlappt.

7. Motor nach einem der Ansprüche 1 bis 6, dadurch gekennzeichnet, dass die umlaufende Bremsenhälfte (22, 23) mit ihrer aus Aluminium bestehenden Flanschennabe (22) auf einen auf der Motorwelle (6) festsitzenden Toleranzring (24) aufgepresst ist, wobei eine Stahlbüchse als Zwischenelement vorgesehen ist.

8. Motor nach einem der Ansprüche 1 bis 7, bei dem der Rotor auf einer Seite einen Kollektor aufweist, dadurch gekennzeichnet, dass die Bremse (18 bis 23) in der dem Kollektor (10) abgewandten Motorhälfte untergebracht ist und diese Motorhälfte vorzugsweise der Abtriebsseite des Motors zugewandt ist.

9. Motor nach Anspruch 3, dadurch gekennzeichnet, dass das Flanschteil (18) so dick wie die äussere Stufe (26) ist.

10. Motor nach Anspruch 3, dadurch gekennzeichnet, dass das Flanschteil (18) auf der Aussenseite des betreffenden Motorflansches (1) vorsteht und sein vorspringender Umfangsrand einen Zentrierungsring für den Anbau weiterer Bauteile bzw. den Einbau des Motors definiert.

## Claims

1. Electric motor equipped with a blocking brake and having a magnetic field running axially or conically, said motor comprises two flanges (1, 2) lying opposite one another to form a stator, several axially projecting stator magnets (11, 12) positioned on the inner sides of said flanges along a circle coaxial to the motor shaft, and a rotor, in particular a flat or conical rotor (9), an air space between the opposing stator magnets, the blocking brake being a permanent magnet or spring pressure disk brake with an electromagnet (18, 19, 27) for easing the brake by counteracting the brake action when activated, characterized in that said blocking brake (18 to 23) is installed completely within one half of the motor essentially in an annular space circumscribed by the stator magnets (11) of the corresponding motor flange (1), and that the stationary half of the brake (18 to 21) comprises a flange piece (18) made of a ferromagnetic material mounted to said motor flange, an inner pole ring (19) that projects on the inner surface of said flange piece coaxially with the motor shaft (6) being adapted to carry in its interior space the bearing for the motor shaft (6) and on its outer periphery the induction winding (21) of the electromagnets.

2. Motor according to claim 1, characterized in that the flange piece (18) is fitted in an opening formed in the motor flange (1) and fastened to it preferably with screws (25), said opening being adapted to the perimeter of said flange piece.

3. Motor according to claim 2, characterized in that the inner wall of the opening of the motor flange (1) has steps, the diameter of the outer step (26) being larger than that of the inner step (27), and that the flange piece (18) of the stationary half of the brake (18 to 21) is placed only in the open section of the outer step (26).

4. Motor according to any one of claims 1 to 3, with a permanent magnet single-disk brake, characterized in that the stationary half of the brake (18 to 21) has a permanent brake magnet (20) in addition to the electromagnet on the inner pole ring (19), and that the rotating half of the brake comprises a flange hub (22) fastened to the motor shaft (6) and an anchor mounted thereon for axial movement and forming the friction ring, the flange piece (18) and the inner pole ring (19) being made in one piece.

5. Motor according to any one of claims 1 to 4, with a shaft placed in ball bearings, characterized in that the axially prestressed outer ring of the ball bearing (7) positioned on the side of the brake is mounted with sliding friction on the inner circumference of the inner pole ring (19), and that the one-piece part comprising the flange piece (18) and the pole ring (19) is constructed and arranged to transfer radial forces, especially oscillations of the motor shaft (6), to the motor flange (1).

6. Motor according to any one of claims 1 to 5, characterized in that a dust cover (31) is pressed on the periphery of the flange hub (22) of the rotating half of the brake (22, 23), said dust cover is covering the brake slit and overlapping without contact a part of the stationary half of the brake (18 to 21) with minimal play.

7. Motor according to any one of claims 1 to 6, characterized in that the rotating half of the brake (22, 23) has an aluminium flange hub (22) pressed on a tolerance ring (24) attached to the motor shaft (6), a steel bush being provided as an intermediate element.

8. Motor according to any one of claims 1 to 7, in which the rotor has a commutator on one side, characterized in that the brake (18 to 23) is mounted in the motor half faced away from the commutator and that this half of the motor preferably faces the output side of the motor.

9. Motor according to claim 3, characterized in that the flange piece (18) is as thick as the outer step (26).

10. Motor according to claim 3, characterized in that the flange piece (18) projects from the outerside of the corresponding motor flange (1) and that its projecting circumferential collar defines a centering ring for the attachment of other components or for mounting the motor.

## Revendications

1. Moteur électrique, à champ magnétique axial ou conique, équipé d'un frein d'arrêt et comprenant deux flasques opposés (1, 2) formant un stator, plusieurs aimants de stator saillants (11, 12) positionnés sur les côtés intérieurs desdits flasques sur un cercle concentrique à l'arbre du moteur, et un rotor, en particulier un rotor plat ou conique (9), avec un entrefer entre les aimants de stator opposés, le frein d'arrêt étant constitué par un frein à disque du type à aimant permanent ou à ressort de pression, portant un électroaimant (18, 19, 27) destiné à débloquer le frein en supprimant l'action de freinage lorsqu'il est excité, caractérisé en ce que le frein d'arrêt (18 à 23) est installé complètement dans une moitié du moteur, essentiellement dans un espace annulaire circonscrit par les aimants de stator (11) du flasque correspondant (1), et en ce que la moitié stationnaire du frein (18 à 21) comprend une partie de flasque (18) en matériau ferromagnétique montée sur ledit flasque (1) et présentant un anneau polaire intérieur (19) faisant saillie sur la surface intérieure de ladite partie de flasque, coaxialement à l'arbre (6) du moteur et portant, à l'intérieur, le palier de l'arbre (6) du moteur et sur la périphérie duquel est disposé le bobinage inducteur (21) de l'électroaimant.

2. Moteur selon la revendication 1, caractérisé en ce que ladite partie de flasque (18) est montée dans une ouverture prévue dans le flasque du moteur (1) et adaptée à sa périphérie, cette partie de flasque étant fixée aux flasques du moteur (1), de préférence au moyen de vis (25).

3. Moteur selon la revendication 2, caractérisé en ce que la paroi intérieure de l'ouverture dans le flasque du moteur (1) est en escalier, le diamètre de la marche extérieure (26) étant plus grand que celui de la marche intérieure (27), et en ce que la partie de flasque (18) de la moitié stationnaire du frein (18 à 21) n'est engagée que dans la partie de l'ouverture limitée par la marche extérieure (26).

4. Moteur selon l'une des revendications 1 à 3, comprenant un frein monodisque à aimant permanent, caractérisé en ce que la moitié stationnaire du frein (18 à 21) comprend en plus de l'électroaimant l'aimant permanent de freinage (20) monté sur l'anneau polaire intérieure (19) et en ce que la moitié rotative du frein est constituée d'un moyeu de flasque (22) fixé sur l'arbre du moteur (6) et d'un induit (23) monté mobile axialement sur ce moyeu et constituant l'anneau de friction, la partie de flasque (18) et l'anneau polaire (19) étant en une pièce.

5. Moteur selon l'une des revendications 1 à 4, comprenant un arbre monté sur des roulements à billes, caractérisé en ce que la bague extérieure (7b) précontrainte axialement du roulement à billes (7) situé du côté du frein est montée à friction glissante sur la circonférence intérieure de l'anneau polaire intérieur (19) et en ce que la partie en une pièce constituée de la partie de flasque (18) et de l'anneau polaire (19) est destinée à transmettre des forces radiales, en particulier les oscillations de l'arbre du moteur (6), sur le flasque de moteur (1).

6. Moteur selon l'une des revendications 1 à 5, caractérisé en ce qu'une douille anti-poussière (31) est pressée sur la périphérie du moyeu de flasque (22) de la moitié rotative du frein (22, 23), cette douille anti-poussière recouvrant la fente de frein et s'étendant sur une partie de la moitié fixe du frein (18 à 21) sans contact et avec un jeu minimum.

7. Moteur selon l'une des revendications 1 à 6, caractérisé en ce que la moitié rotative du frein (22, 23) est montée à force par son moyeu en aluminium (22) sur une bague de tolérance (24) fixée sur l'arbre (26) du moteur, un fourreau en acier étant prévu comme élément intermédiaire.

8. Moteur selon l'une des revendications 1 à 7, dans lequel le rotor comprend d'un côté un commutateur, caractérisé en ce que le frein (18 à 23) est monté dans la moitié du moteur opposée au commutateur et en ce que cette moitié du moteur est de préférence située du côté de la sortie du moteur.

9. Moteur selon la revendication 3, caractérisé en ce que la partie de flasque (18) est aussi épaisse que la marche extérieure (26).

10. Moteur selon la revendication 3, caractérisé en ce que la partie de flasque (18) fait saillie sur la face extérieure du flasque du moteur (1) et que son pourtour constitue un anneau de centrage pour la fixation d'autres composantes ou pour le montage du moteur.

Fig.1

0 111 350

## Fig. 2

3    5    1    18    25   6